# EUROPÄISCHE PATENTSCHRIFT

(11) **EP 1 407 983 B1**
(45) Veröffentlichungstag und Bekanntmachung des Hinweises auf die Patenterteilung: **17.05.2006**
(21) Anmeldenummer: 03021528.9
(22) Anmeldetag: 24.09.2003
(51) Int. Cl.: B65G 1/04

(54) **Vorrichtung für die Übernahme und den Transport von Paletten**
Pallet storage and retrieval apparatus
Dispositif pour le stockage et l'extraction de palettes de transport

(30) Priorität: 11.10.2002 DE 10247617; 09.01.2003 DE 10300319
(43) Veröffentlichungstag der Anmeldung: 14.04.2004
(73) Patentinhaber: HORSTMANN GmbH & CO. KG, 32545 Bad Oeynhausen (DE)
(72) Erfinder: Büschenfeld, Siegfried, 32584 Löhne (DE)
(74) Vertreter: Flügge, Christian

(56) Entgegenhaltungen:
- DE-A- 2 443 827
- US-A- 5 380 139
- US-A- 5 558 483
- US-A- 6 042 321

## Beschreibung

Die Erfindung betrifft eine Vorrichtung für die Übernahme und den Transport von Paletten in einem Hochregallager.

Hochregallager sind als automatisierte Stückgutlager mit Höhen bis 45 Meter und Längen bis 150 Meter bei guter Flächennutzung bekannt und bewährt. Die meist palettierten Gütern lagern in Regalen, die in Stahl- oder Betonbauweise erricht sind und oftmals gleichzeitig als tragende Elemente für das Dach und Gebäudewände dienen. Die Beschickung der Regale erfolgt über meist fahrerlose, rechnergesteuerte Regalförderzeuge mit elektrischen Antrieben, wobei in der Regel in jedem Regalgang ein Bediengerät angebracht ist. Umsetzgeräte ermöglichen die Bedienung mehrerer Gänge mit nur einem Regalbediengerät. Die Anbindung des Hochregallagers an den innerbetrieblichen Materialfluß erfolgt häufig über Stetigförderer, wie Rollen- oder Kettenförderer, Gabelstapler oder Hängebahnen.

Regalförderzeuge für das ein- und auslagern von Paletten und anderen Behältern in Hochregallagern werden in boden-, regal-und deckenverfahrbare Vorrichtungen unterteilt. Häufig sind bodenverfahrbare Regalförderzeuge, auf Schienen fahrende Hochgerüste, die bis 15 Meter Höhe in Einsäulen-, bei größeren Höhen in Zweisäulenbauweise ausgeführt sind. Sie bestehen regelmäßig aus einem Grundrahmen, Fahrwerk, Hubmast, Hubwerk und Lastaufnahmemittel wie Teleskopgabel, Teleskoptische oder Schwenkhubgabeln.

Eine optimale Nutzung von Horchregallagern erlaubt allerdings lediglich die Lagerung von gleichartigen Normbehältern wie beispielsweise die von Europaletten, die jeweils eine Grundfläche von 1.200 x 800 mm² bzw. bei Überladung eine Grundfläche von 1.300 x 850 mm² und Höhen zwischen 1.500 mm und 1.800 mm aufweisen.

Sollen neben den Europaletten bspw. Halbpaletten, deren Grundfläche Abmessungen von 600 x 800 mm², bei Überladung von 650 x 850 mm² aufweisen, Verwendung finden, so geht bei den bekannten Hochregallagern sofort die optimale Ausnutzung und der optimierte Umschlag verloren.

Aus der US-A-6042321 ist ein Regalförderzeug für die Übernahme und den Transport von gleichartigen Behältern für Molkereiprodukten, geeignet aber auch für Paletten, in einem Hochregallager mit zwei unmittelbar nebeneinander liegenden Linien für die Übernahme, den Transport und die Lagerung der Behälter bzw. Paletten bekannt, die von im wesentlichen funktionsgleichen, nebeneinander liegenden Vorrichtungen bedient werden, die synchron betrieben werden können. Hierzu weist das Regalförderzeug zwei an Armen vertikal verfahrbare Flurförderfahrzeuge für die Aufnahme und den horizontalen Transport der Behälter bzw. Paletten in Lagergängen auf. Für eine Aufnahme bzw. ein Absetzen der Behälter oder Paletten ist ein solches gem. WO 95/23730 ausgebildetes Flurförderfahrzeuge mit einem Kettenförderer mit jeweils wenigstens zwei synchron umlaufenden Ketten versehen.

Vor diesem technischen Hintergrund macht die Erfindung es sich zur Aufgabe, ein Regalförderzeug zur Verfügung zu stellen, mit dem sehr effizient Hochregallager bedienbar sind und das insbesondere auch für Paletten unterschiedlicher Größe geeignet ist.

Diese technische Problematik wird bei einem Regalförderzeug für die Übernahme und den Transport von Paletten in einem Hochregallager gem. des Anspruchs 1 durch die Maßnahmen gelöst, dass das Regalförderzeug für die Übernahme der Paletten mit einer Aufnahmestation für die Paletten versehen ist, dass die Aufnahmestation einen Kettenförderer mit wenigstens drei nebeneinander und voneinander beabstandet angeordneten, umlaufenden Gelenkketten aufweist und dass zwischen benachbarten Gelenkketten zwei im wesentlichen gleich ausgebildete Flurförderfahrzeuge motorisch selbstständig verfahrbar vorgesehen sind.

Das Regalförderzeug nach der Erfindung bietet eine Vielzahl von Möglichkeiten. Zunächst erfolgt eine Verdopplung der Kapazität für die Übernahme und den Transport durch ein einziges Regalförderzeug durch das Vorhersehen von zwei unmittelbar nebeneinander liegenden Linien für die Übernahme, den Transport und die Lagerung von Paletten. Unmittelbar nebeneinander liegend bedeutet hier insbesondere, dass wenigstens zwei Paletten ohne wesentlichen Zwischenraum nebeneinander angeordnet übernommen und transportiert werden können.

Bedient werden die beiden Linien von im wesentlichen funktionsgleichen, nebeneinander liegenden Vorrichtungen des Regalförderzeuges, die synchron betrieben werden können. Hierdurch erfolgt gegenüber zwei herkömmlichen Regalförderzeugen eine erhebliche Einsparung an Material wie auch eine erhebliche Minimierung des Steuer- und Regelaufwandes.

Insbesondere können weiter die nebeneinander liegenden Vorrichtungen in den zwei unmittelbar nebeneinander liegenden Linien derart ausgebildet sein, dass durch die beiden nebeneinander liegenden Vorrichtungen eine Einzelpalette einer vorgegebenen Grundfläche, beispielsweise eine Europalette, gemeinsam übernommen und transportiert werden kann oder alternativ zwei Paletten dann der hälftigen Abmessung der Grundfläche, beispielsweise eine Halbpalette, gegebenenfalls allerdings auch nur eine einzige Halbpalette in einer Linie.

Bei dem Regalförderzeug nach der Erfindung ist weiter für die Übernahme einer bzw. zweier Paletten nebeneinander eine Aufnahmestation vorgesehen, die einen Kettenförderer mit wenigstens drei nebeneinander und voneinander beabstandet angeordneten, umlaufenden Gelenkketten aufweist. Hierbei ist insbesondere an eine mittige Anordnung einer einzigen, innen liegenden Gelenkkette mit Bezug auf die Abmessung einer großen Palette gedacht. Damit kann der Kettenförderer eine große Palette auf den wenigstens drei Gelenkketten oder, wenn vorgesehen ist, dass die mittlere Gelenkkette zumindest abschnittsweise eine Breite aufweist derart, dass der Stoß zweier nebeneinander angeordneter Paletten sicher untergriffen ist, auch zwei im wesentlichen abstandslos nebeneinander angeordnete Paletten aufnehmen.

Hierdurch kann zumindest eine Gelenkkette gegenüber der alternativen Ausbildung zweier eigenständiger, unmittelbar benachbarter Kettenförderer eingespart werden. Gleichwohl übernimmt erfindungsgemäß der nur eine Kettenförderer mit wenigstens drei Gelenkketten die Funktion der zwei eigenständigen mit wenigstens vier Gelenkketten.

Als zweckmäßig hat es sich weiter erwiesen, wenn die Gelenkketten mechanisch synchronisiert umlaufend ausgebildet sind, beispielsweise durch einen gemeinsamen Antrieb auf einer durchgängigen Achse.

Insbesondere hierbei hat es sich auch als zweckmäßig erwiesen, wenn die Gelenkkette zumindest einen Abschnitt mit unmittelbar nebeneinander liegenden, miteinander verkoppelten Gelenkkettenabschnitten aufweist. Hierbei können die Gelenkkettenabschnitte bevorzugt aus gleichartigen Kettengliedern ausgebildet sein. Eine solche Ausbildung hat gegenüber einer alternativen Konstruktion mit einzelnen, dann sehr breiten Kettengliedern den Vorteil, dass die nötige Führung einfacher gestaltbar ist.

Es kann vorgesehen sein, dass auch ein solcher Abschnitt nebeneinander liegender, mit einander verkoppelter Gelenkkettenabschnitte als eine vollständig umlaufende Gelenkkette ausgebildet ist. Bevorzugt ist jedoch, dass in einer Draufsicht auf eine Abwicklung des Abschnitts dessen Anfang bzw. Ende zu den äußeren Seitenrändern hin jeweils verkürzte Gelenkkettenabschnitte aufweist. Die Gesamtlänge der Abwicklung des Abschnittes wird der entsprechenden Länge der aufzunehmenden Palette entsprechen bzw. geringfügig größer gewählt sein. Damit stellt sich in der Draufsicht der Anfang bzw. das Ende des Abschnitts mit einer Spitze dar, wobei weiter bevorzugt wird, dass wenigstens ein mittig angeordneter Gelenkkettenabschnitt als Gelenkkette vollständig umlaufend ausgebildet ist und insbesondere ein einziger Abschnitt.

Infolge dieser Maßnahmen wird zum einen ein wohl definierter Abschnitt der umlaufenden Gelenkkette geschaffen, dessen Positionierung beispielsweise mittels Drehgeber exakt bestimmbar ist. Auch werden die selbstverständlich in Umlaufrichtung gleich positionierten Abschnitte der drei Gelenkketten zum anderen von Stetigförderern, Gabelstaplern oder dergleichen angelieferte Paletten exakt positioniert und gleichzeitig aufnehmen. Dabei erfolgt die Aufnahme der Paletten durch die Ausbildung des Anfangs bzw. des Endes des Abschnitts mit sich nach außen hin sich verkürzenden Gelenkkettenabschnitten in äußerst schonender Weise.

Die Gelenkkette und die Gelenkkettenabschnitte können Rollen aufweisen, die sich in dem Paletten tragenden Bereich auf Führungsstegen abstützen. So wird eine sichere und verschleißarme Bewältigung des durchaus erheblichen Gewichtes einer bzw. zweier Paletten nebeneinander und/oder auch hintereinander gewährleistet.

Ein besonderer Vorteil dieser Maßnahmen ist ferner darin zu sehen, dass der Raum unterhalb eines Führungsprofils für den Umlauf des einzigen, insbesondere mittleren Gelenkkettenabschnitts mit Bezug auf die Transportrichtung sehr schmal gehalten werden kann, da Rollen, Führungen oder dergleichen zumeist nur für den einen mittleren Gelenkkettenabschnitt ausgebildet werden müssen und in Folge die benötigte Breite im wesentlichen lediglich durch die Gesamtbreite der Gelenkkettenabschnitte bestimmt wird.

In einer bevorzugten Ausführungsform ist bei dem Regalförderzeug nach der Erfindung der Kettenförderer als Paletten tragende Baugruppe eines Aufzuges ausgebildet. Der Kettenförderer mit den von diesem aufgenommenen Paletten wird vertikal verfahren, womit in einer einfachen Weise eine Höhenpositionierung der in einem Regalgang einer bestimmten Etage des Hochregallagers abzusetzenden Paletten gewährleistet ist.

Für ein horizontales Verfahren in einem Regalgang ist weiter vorgesehen, dass die Führungsprofile zumindest gegenüberliegend von L-förmigen Profilen getragen sind, wobei die horizontal sich erstreckenden, aufeinander zu weisenden Schenkel als Fahrbahn für ein Flurförderfahrzeug ausgebildet sind. Die beiden Flurförderfahrzeuge werden insbesondere synchron nach der vertikalen Positionierung des Kettenförderers im Aufzug die Palette bzw. die Paletten von dem Kettenförderer abnehmen, horizontal in dem Regalgang verfahren und dort exakt positioniert absetzen.

Hierbei wird das mittlere Führungsprofil für die Gelenkkette von zwei mittleren L-förmigen Profilen bevorzugt getragen, wodurch ein etwa H-förmiger Querschnitt insgesamt ausgebildet wird. Denn aufgrund der Ausbildung der Gelenkkette und der daraus resultierenden schmalen Baubreite unterhalb insbesondere des mittleren Führungsprofils können die L-förmigen Profile nahezu Rücken an Rücken angeordnet werden. Infolgedessen können die Flurförderfahrzeuge vergleichsweise eng benachbart auch ausgebildet werden und sind insbesondere auf diesen zwei mittleren L-förmigen Profile ablaufende Rollen der Flurförderfahrzeuge Platz sparend innerhalb des H-förmigen Querschnitts angeordnet.

Bevorzugt ist weiter, dass zwischen benachbarten Gelenkketten zwei im wesentlichen gleich ausgebildete Flurförderfahrzeuge motorisch selbstständig verfahrbar vorgesehen sind, die elektrisch/elektronisch synchronisiert parallel verfahrbar sind. Damit wird sicher gestellt, dass von beiden Flurförderfahrzeugen auch gemeinsam wenigstens eine einzige große Palette verfahren werden kann bzw. in gleicher Weise von jeweils einem Flurförderfahrzeug wenigstens eine Palette.

Hierzu ist in konstruktiver Ausgestaltung der Flurförderfahrzeuge vorgesehen, dass jedes Flurförderfahrzeug über wenigstens eine anhebbare Tragplatte für eine Palette verfügt, die aus einer Position oberhalb der Gelenkketten unter dieselben absenkbar ausgebildet ist. Damit kann jedes Flurförderfahrzeug, das unter einer Palette positioniert ist, diese anheben, so dass die Palette frei von dem Kettenförderer ist. Nach dem horizontalen Verfahren der Palette durch das Flurförderfahrzeug wird die Tragplatte wieder abgesenkt und die Palette auf beispielsweise einem Gleissystem abgesetzt, dessen Höhe über dem Fahrboden der Höhe der Oberseite der Gelenkkette im wesentlichen entspricht.

Aufgrund der Ausbildung des H-förmigen Querschnitts der mittleren L-förmigen Profile und des mittleren Führungsprofils und der innerhalb dieses H-förmigen Querschnitts angeordneten Rollen der Flurförderfahrzeuge steht im wesentlichen die gesamte Breite zwischen den Führungsprofilen bzw. der maximalen Breite der Gelenkkettenabschnitte für die Ausbildung der Tragplatte zur Verfügung.

Abhängig von dem zur Verfügung Raum für das Regalförderzeug kann auch vorgesehen werden, dass mehrere Paletten hintereinander von dem Kettenförderer aufgenommen und von den Flurförderfahrzeugen übernommen und abgesetzt werden können. Eine durch die Anzahl der Paletten nacheinander bestimmte Baulänge des Kettenförderers bzw. der Tragplatten der Flurförderfahrzeuge oder alternativ eine der Anzahl der Paletten entsprechende Anzahl an Tragplatten hintereinander ist dann vorzusehen.

Hierbei hat es sich weiter als zweckmäßig erwiesen, wenn in den Eckbereichen einer Tragplatte gleichermaßen ausgerichtete Nocken angelenkt sind, die paarweise nebeneinander auf der gleichen, horizontalen Achse und hintereinander auf parallelen, in einer Ebene liegenden Achsen verschwenkbar angeordnet sind. Hierdurch wird bei der Aufnahme bzw. bei dem Absetzen einer Palette eine permanente horizontale Ausrichtung der Tragplatte gewährleistet, wobei die Tragplatte selbst im einem Bogen befördert wird. Ein sehr weiches Aufnehmen bzw. Absetzen ist so gewährleistet, wobei die Bauhöhe der Flurförderfahrzeuge sehr gering gehalten werden kann.

Alternativ bietet sich beispielsweise eine vertikale Positionierung der Tragplatte durch pneumatisch betriebene Zylinder, elektromotorisch betriebene Spindeln, Scheren oder dergleichen mehr auch an.

Um sicher zu stellen, dass auch eine von zwei Flurförderfahrzeugen getragene Palette sicher aufgenommen bzw. abgesetzt werden kann, ist weiter vorgesehen, dass die Flurförderfahrzeuge jeweils einen gesondert ausgebildeten Hubantrieb aufweisen und dass die Hubantriebe elektrisch/elektronisch gekoppelt sind und damit zugleich die eine Palette bewegen.

Für die elektrisch/elektronische Kopplung der Hubantriebe bzw. Fahrantriebe bieten sich eine Vielzahl von Möglichkeiten an. Entsprechende Sensoren wie Drehgeber für die Hubantriebe oder dergleichen mehr können hierzu vorgesehen sein, deren Werte überprüft und gleich gestellt werden. Für die elektrisch/elektronische Synchronisation bei dem Verfahren der Flurförderfahrzeuge hat sich in der Praxis eine Kabelmessung der verfahren Wegstrecke bei jedem der Flurförderfahrzeuge als äußerst zweckmäßig erwiesen.

Die Erfindung wird anhand der Zeichnung näher erläutert, in der lediglich schematisch Ausführungsbeispiele dargestellt sind.

In der Zeichnung zeigt:
- Fig. 1:: einen horizontalen Schnitt ein Hochregallager,
- Fig. 2:: einen vertikalen Längsschnitt durch das Hochregallager nach Fig. 1,
- Fig. 3:: die Ansicht eines Regalförderzeuges nach der Erfindung,
- Fig. 4:: eine Seitenansicht des Regalförderzeuges nach Figur 3,
- Fig. 5:: eine Darstellung von Regalgängen,
- Fig. 6:: eine vergrößerte Darstellung von Kettenförderer und Flurförderfahrzeug in einer Ansicht gem. Fig. 3,

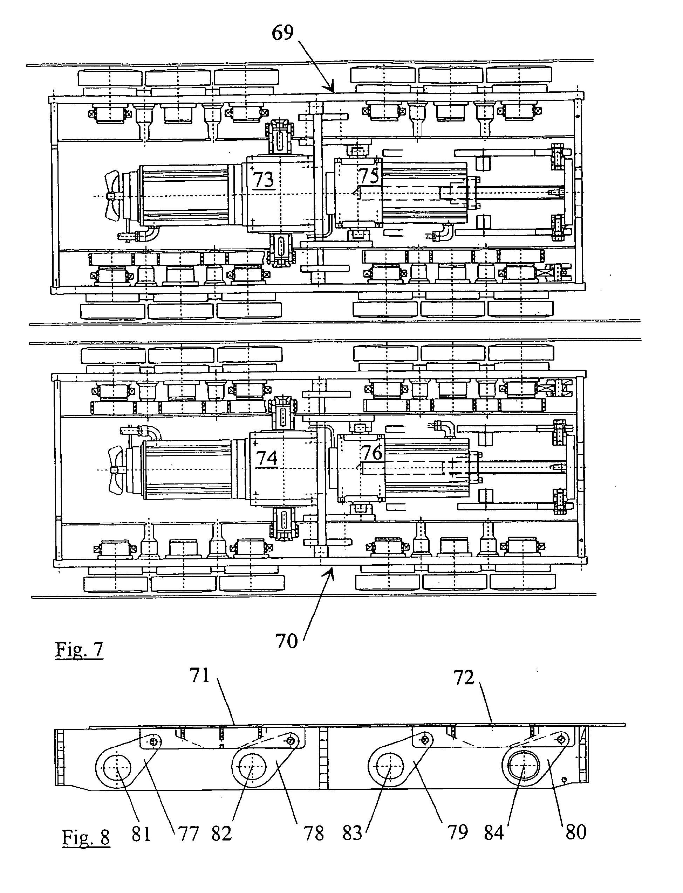

- Fig. 7:: eine Draufsicht auf zwei Flurförderfahrzeuge, teilweise geschnitten,
- Fig. 8:: schematisch den Hubantrieb von Tragplatten,
- Fig. 9:: eine Draufsicht auf eine Abwicklung einer Gelenkkette,
- Fig. 10:: eine Seitenansicht der Gelenkkette gem. Figur 9,
- Fig. 11:: in einer Frontansicht die vergrößerte Darstellung einer Führung für die Gelenkkette und
- Fig. 12:: eine vergrößerte seitliche Ansicht des Kettenförderers gem. Fig. 4.

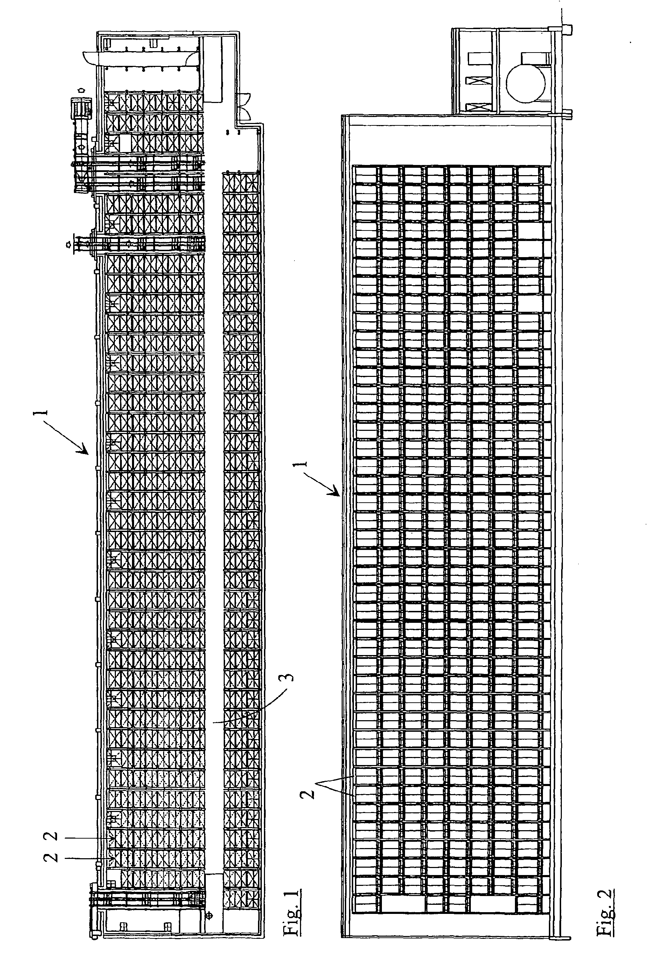

Die Figuren 1 und 2 zeigen ein an sich bekanntes Hochregallager 1 mit einer Vielzahl, hier 41, von Lagergängen 2 in acht Etagen. Die Kapazität eines Hochregallagers 1 derartiger Dimensionen liegt regelmäßig zwischen 3000 und 4000 Europaletten.

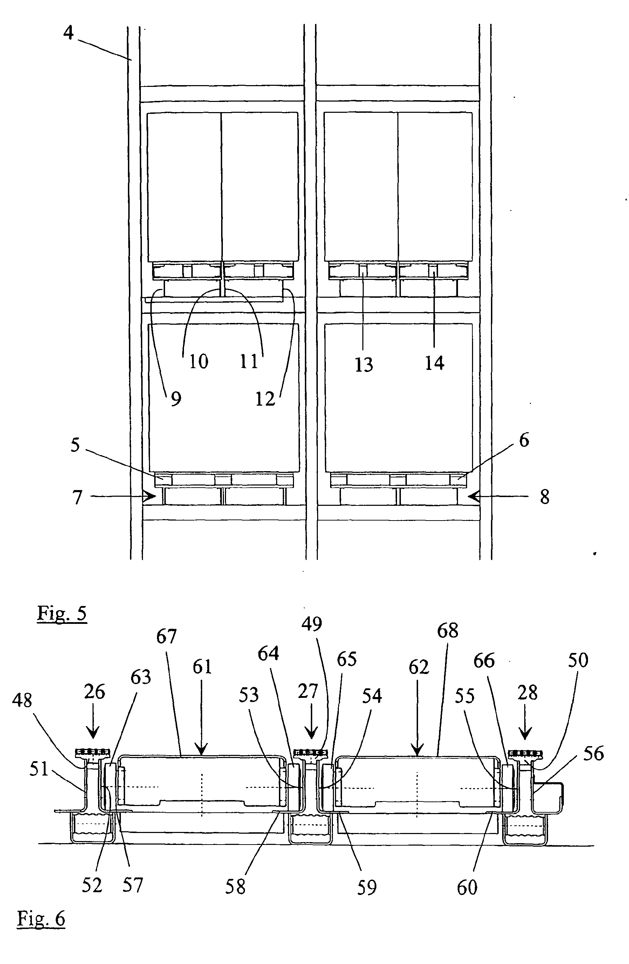

Die Lagergänge 2 werden von einem zentralen Gang 3 von Regalförderzeugen erfindungsgemäß insbesondere mit jeweils 2 nebeneinander angeordneten Paletten beschickt, vergleiche Figur 2, einem Schnitt durch den zentralen Gang 3, und auch Figur 5 in einer vergrößerten Darstellung.

Die Lagergänge 2 werden in an sich üblicher Bauweise durch ein tragendes Gerüst 4 ausgebildet.

Die in Figur 5 unteren Lagergänge sind hier beispielsweise mit jeweils einer Reihe beladener Paletten 5, 6 beschickt, die auf einer gleisartigen Abstützung 7, 8 ruhen. Jede der gleisartigen Abstützungen 7, 8 werden durch vier parallel verlegte, U-förmige Profile 9-12 ausgebildet, wobei die mittig angeordneten Profile 10, 11 Rücken an Rücken angeordnet und mit ihren freien Schenkel auf die gegenüberliegenden Schenkel der äußeren Profile 9 und 12 weisend ausgerichtet sind.

Alternativ könnten die mittleren Profile 10, 11 auch durch einen einzelnen H-Träger ersetzt werden.

Infolge dieser Maßnahmen ist es möglich, in den Lagergängen 2 auch zwei Reihen Paletten 13, 14 unmittelbar nebeneinander anzuordnen.

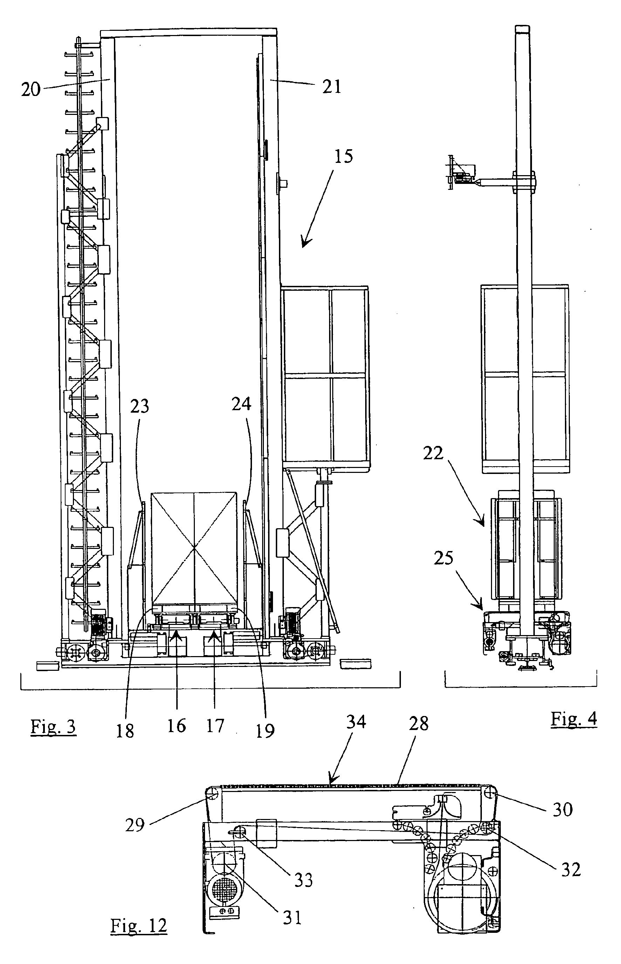

Für die Beschickung der Lagergänge 2 mit von bspw. Stetigförderern angelieferten Paletten ist gemäß der Erfindung ein Regalförderzeug 15 vorgesehen, dargestellt in den Figuren 3 und 4, das in dem zentralen Gang 3 in an sich üblicher Weise, bspw. schienengebunden, verfahrbar angeordnet ist.

Das Regalförderzeug 15 ist für zwei unmittelbar nebeneinander liegende Linien 16, 17 für die Übernahme, den Transport und die Lagerung von Paletten 18, 19 ausgelegt. Die in Figur 3 dargestellten, unmittelbar nebeneinander angeordneten Paletten 18, 19 werden nach der Erfindung von im wesentlichen funktionsgleichen, nebeneinander liegenden Vorrichtungen bedient, die auch synchron betrieben werden können, so dass auch eine einzelne Palette, die dann die doppelte Breite der einer einzelnen Palette 18 19 aufweist, von den nebeneinander liegenden Vorrichtungen übernommen und transportiert werden kann.

In an sich üblicher Weise sind hier für das Regalförderzeug 15 zwei Säulen 20, 21 vorgesehen, an denen aufzugartig die Paletten 18, 19 in der Höhe verfahren und entsprechend den Etagen des Hochregallagers vertikal positioniert werden können.

Die von einem Stetigförderer beispielsweise an das Regalförderzeug 15 herangeführten Paletten werden von diesem in einer Aufnahmestation 22 nach Durchlaufen beispielsweise eines Lademaßes mit stangenartigen Begrenzungsvorrichtungen 23, 24 von einem Kettenförderer 25 aufgenommen, vergleiche auch die Figuren 6 und 12, der funktionsmäßig zwei nebeneinander liegende Kettenförderer in sich vereinigt, so dass von diesem Kettenförderer 25 zwei einzelne, nebeneinander angeordnete Paletten 18, 19 gleichzeitig auch aufgenommen werden können.

Der Kettenförderer 25 ist mit den aufgenommenen Paletten 18, 19 als gesamte Baugruppe nach Art eines Aufzuges an den Säulen 20, 21 vertikal verfahrbar, so dass alle Stockwerke des Hochregallagers 1 bedient werden können.

Der Kettenförderer 25 weist weiter drei nebeneinander und von einander beabstandet angeordnete, umlaufende Gelenkketten 26-28 für die synchrone Aufnahme der Paletten 18, 19 auf. Die mittlere Gelenkkette 27 ist weiter derart breit ausgebildet, dass der Stoß der nebeneinander angeordneten Paletten 18, 19 immer sicher untergriffen ist.

Die Gelenkketten 26-28 können an eine gemeinsame Abtriebswelle eines Antriebes bspw. auch über geeignete Vorgelege angeschlossen sein, womit die Gelenkketten 26-28 dann mechanisch exakt synchronisiert umlaufend ausgebildet sind.

Wie Figur 12 zeigt, erfolgt der Umlauf der Gelenkketten 26-28 etwa L-förmig, wobei die Umlenkung aus der Ebene der Aufnahme der Paletten 18, 19 zurückgenommen erfolgt. Es heißt dies, dass zwei obere Umlenkrollen 29, 30 einen größeren horizontalen Abstand aufweisen als zwei untere Umlenkrollen 31, 32. Eine äußere Umlenkrolle 33 verhilft dem Umlauf zu der L-förmigen Ausbildung und dient bevorzugt gleichzeitig als Spannrad. Infolge dieser Maßnahme werden für die Paletten 18, 19 gleichsam Auflaufschrägen ausgebildet, wodurch die Aufnahme sehr materialschonend erfolgt.

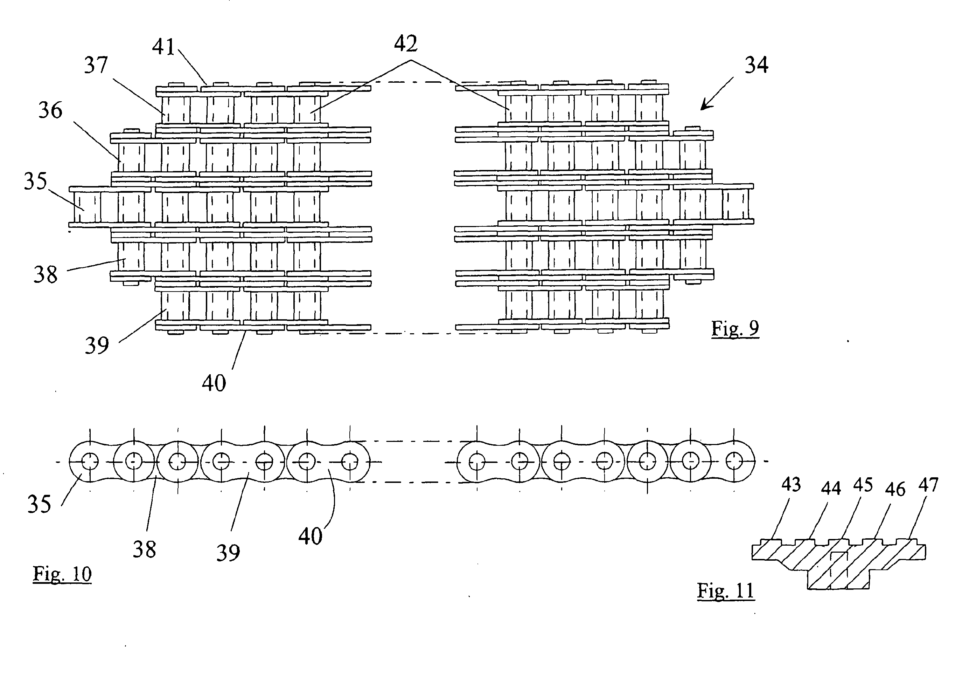

Die Gelenkketten 26-28 weisen jeweils, im Umlauf gleichermaßen angeordnet, hier lediglich einen Abschnitt 34 gemäß Figur 9 auf, bei dem unmittelbar nebeneinander liegende, miteinander verkoppelte Gelenkkettenabschnitte 35-39 ausgebildet sind, so dass hier über die gesamte Breite fünf Gelenkkettenglieder nebeneinander liegend angeordnet sind.

Die Länge des Abschnitts wird durch die Tiefe einer Palette im wesentlichen bestimmt. Gegebenenfalls ist sie derart zu wählen, das auch mehrere, hintereinander nachfolgende Paletten in einem Arbeitsschritt von dem Kettenförderer 25 in einem Arbeitstakt mit aufgenommen werden

Von den Gelenkkettenabschnitten 35-39 ist lediglich der mittlere Gelenkkettenabschnitt 35 verlängert und geschlossen umlaufend ausgebildet. Dieser umlaufende Gelenkkettenabschnitt 35 nimmt die weiteren Gelenkkettenabschnitte 36-39 auf dem Weg um die Umlenkrollen 29-32 gleichsam mit.

Da nur der mittlere Gelenkkettenabschnitt 35 umlaufend ausgebildet ist, bedarf es lediglich einer geringen Breite der für den Umlauf vorgesehenen Umlenkrollen 29-32 bzw. vergleichbarer Führungsbauteile.

In der Draufsicht gem. Fig. 9 auf die Abwicklung des Abschnitts 34 ist weiter zu erkennen, dass zu den äußeren Seitenrändern 40, 41 hin die Gelenkkettenabschnitte 36, 38 bzw. 37, 39 jeweils um ein Kettenglied gekürzt sind, so dass sich in der Draufsicht der Anfang bzw. das Ende des Abschnitts 34 spitz ausgebildet darstellt. In Verbindung mit der Umlenkung des hier vollständig umlaufenden mittleren Gelenkkettenabschnitts 35 über die Umlenkrollen 29-32 und die Ausbildung der Gelenkkettenabschnitte 36-39 wird eine sehr sanfte und materialschonende, dabei synchrone Aufnahme der Paletten 18, 19 gewährleistet.

Insbesondere, wenn beispielsweise eine gemeinsame Antriebswelle der Gelenkketten 26-28 vorgesehen und damit deren mechanische Synchronisation gegeben und diese Antriebswelle bspw. mit einem Drehgeber versehen ist, wird hierdurch auch eine genaue, exakte Positionierung der Paletten 18, 19 auf den Gelenkketten 26-28 erreicht.

Die Gelenkketten 26-28 bzw. die Gelenkketteabschnitte 35-39 weisen weiter Rollen 42 auf, die sich in dem die Paletten 18, 19 tragenden Bereich des Kettenförderers 25 auf Führungsstegen 43-47 abstützen, vergleiche Figur 11 und Figur 6. Die hier in Führungsprofilen 48-50, ein einzelnes ist in Fig. 11 vergrößert dargestellt, zusammengefaßten Führungsstege werden von L-förmigen Profilen 51-56 getragen. Dabei kann eine Ausrichtung der L-förmigen Profile 52-55 derart erfolgen, dass die unteren, sich horizontal erstreckenden und aufeinander zu weisenden Schenkel 57, 58 bzw. 59, 60 bei dem Einbringen von Paletten 5, 6 bzw. 13, 14 in Lagergänge 2 mit den dort vorgesehenen horizontal sich erstreckenden Schenkeln der Profile 9-12 fluchten, womit für zwei Flurförderfahrzeuge 61, 62, die auf Rollen 63-66 motorisch selbstständig verfahrbar sind, vier Fahrbahnen ausgebildet werden. Dieses Verfahren der beiden Flurförderfahrzeuge 61, 62 erfolgt elektrisch/elektronisch synchronisiert, gleichsam durch eine elektrische Welle gekoppelt.

Wie Fig. 6 weiter zeigt, wird das mittlere Führungsprofil 49 für die Gelenkkette 27 von den zwei mittleren L-förmigen Profilen 53,54 getragen, wodurch ein etwa H-förmiger Querschnitt insgesamt ausgebildet wird. Denn aufgrund der Ausbildung der Gelenkkette 27 und der daraus resultierenden schmalen Baubreite unterhalb insbesondere des mittleren Führungsprofils 49 können die L-förmigen Profile 53,54 nahezu Rücken an Rücken angeordnet werden. Infolgedessen sind die zwei Flurförderfahrzeuge 61,62 vergleichsweise eng benachbart auch ausgebildet und sind insbesondere auf den horizontalen Schenkeln 58,59 dieser zwei mittleren L-förmigen Profile 53,54 ablaufende Rollen 64,65 Platz sparend innerhalb des H-förmigen Querschnitts angeordnet.

Jedes Flurförderfahrzeug 61, 62 verfügt über wenigstens eine anhebbare Tragplatte 67, 68, die aus der in Figur 6 gezeigten Lage unterhalb der Auflagefläche der Gelenkketten 26-28 des Kettenförderers 25 nach Aufnahme einer Palette bzw. zweier Paletten in eine Position angehoben werden können, in der die Paletten frei von den Gelenkketten 26-28 und dem Gleissystem der Abstützungen 7, 8 in den Regalgängen 2 sind. Danach können die Paletten auf den Tragplatten 67,68 von den Flurförderfahrzeugen 61,62 horizontal in die Lagergänge 2 verfahren werden.

Bei den Flurförderfahrzeugen 69, 70 sind bspw. hier zwei hintereinander liegende Tragplatten 71, 72 jeweils ausgebildet für die Aufnahme zweier Paletten hintereinander, so dass zwei große oder vier kleine Paletten gleichzeitig verfahren und angehoben bzw. abgesetzt werden können.

Da die Flurförderfahrzeuge 61,62 aufgrund der Bauweise der Gelenkkette 27 eng benachbart sind, steht nahezu die gesamt Breite zwischen den Führungsprofilen 48,49 bzw. 49,50 auch für die Ausbildung der Tragplatten 71,72 zur Verfügung.

Damit durch die Flurförderfahrzeuge 69, 70 bis zu vier Paletten gleichzeitig horizontal verfahren und von einem Kettenförderer 25 aufgenommen werden können, muß dieser eine entsprechende Baulänge auch aufweisen.

Die im wesentlichen gleichartig ausgebildeten Flurförderfahrzeuge 69, 70 weisen neben den elektromotorischen und elektrisch/elektronisch gekoppelten Fahrantrieben 73, 74 gesondert ausgebildete Hubantriebe 75, 76 weiter auf, die gleichfalls elektrisch/elektronisch gekoppelt sind, so dass eine oder zwei von beiden Wagen getragene Palette nicht nur synchron horizontal verfahren werden, sondern auch gleichzeitig aufgenommen bzw. abgesetzt werden können.

Die Hubantriebe 75, 76 heben über in den Eckbereichen der Tragplatten 71 bzw. 72 angelenkte Nocken 77-80 die Tragplatten 71, 72 an, indem die Nocken 77-80 gleichermaßen um in einer Ebene liegende, hintereinander angeordnete, parallele Achsen 81-84 verschwenken.

Hierdurch verbleiben die Tragplatten 71, 72 bei dem Aufnehmen bzw. dem Absetzten einer Palette in einer horizontalen Ausrichtung und erfolgt das Aufnehmen bzw. Absetzen sehr sanft auf einer Kreisbahn.

Für die Steuerung der elektrisch/elektronisch gekoppelten zwei Flurförderfahrzeuge 69, 70 bieten sich eine Vielzahl von Möglichkeiten weiter an. Insbesondere ist für das horizontale Verfahren daran gedacht, dass die verfahrene Wegstrecke durch eine Kabelmessung erfolgt, wozu jeweils ein Kabel einerends an einer angetriebenen Trommel an dem Kettenförderer 25 festgelegt ist und andernends an jeweils einem der Flurförderfahrzeug 69, 70. Magnet-Hall-Schalter und Magnete können weiter der exakten Positionierung der Flurförderfahrzeuge 69, 70 dienlich sein, sowohl in den Regalgängen 2 als insbesondere auch innerhalb des Kettenförderers 25 selbst.

Weitere sicherheitsrelevanten Maßnahmen, wie beispielsweise frontseitige Sensoren, beispielsweise PIR-Systeme, Fotozellen oder dergleichen mehr, können sicherstellen, dass bspw. eine Blockade des Weges innerhalb eines Regalgangs 2 erkannt wird und entsprechend die Flurförderfahrzeuge 69, 70 abgeschaltet werden.

### Bezugszeichenliste:

- 1.: Hochregallager
- 2.: Regalgang
- 3.: Gang
- 4.: Gerüst
- 5.: Palette
- 6.: Palette
- 7.: Abstützung
- 8.: Abstützung
- 9.: U-Profil
- 10.: U-Profil
- 11.: U-Profil
- 12.: U-Profil
- 13.: Palette
- 14.: Palette
- 15.: Regalförderzeug
- 16.: Linie
- 17.: Linie
- 18.: Palette
- 19.: Palette
- 20.: Säule
- 21.: Säule
- 22.: Aufnahmestation
- 23.: Begrenzungsvorrichtung
- 24.: Begrenzungsvorrichtung
- 25.: Kettenförderer
- 26.: Gelenkkette
- 27.: Gelenkkette
- 28.: Gelenkkette
- 29.: Umlenkrolle
- 30.: Umlenkrolle
- 31.: Umlenkrolle
- 32.: Umlenkrolle
- 33.: Umlenkrolle
- 34.: Abschnitt
- 35.: Gelenkkettenabschnitt
- 36.: Gelenkkettenabschnitt
- 37.: Gelenkkettenabschnitt
- 38.: Gelenkkettenabschnitt
- 39.: Gelenkkettenabschnitt
- 40.: Seitenrand
- 41.: Seitenrand
- 42.: Rolle
- 43.: Führungssteg
- 44.: Führungssteg
- 45.: Führungssteg
- 46.: Führungssteg
- 47.: Führungssteg
- 48.: Führungsprofil
- 49.: Führungsprofil
- 50.: Führungsprofil
- 51.: L-Profil
- 52.: L-Profil
- 53.: L-Profil
- 54.: L-Profil
- 55.: L-Profil
- 56.: L-Profil
- 57.: Schenkel
- 58.: Schenkel
- 59.: Schenkel
- 60.: Schenkel
- 61.: Flurförderfahrzeug
- 62.: Flurförderfahrzeug
- 63.: Rolle
- 64.: Rolle
- 65.: Rolle
- 66.: Rolle
- 67.: Tragplatte
- 68.: Tragplatte
- 69.: Flurförderfahrzeug
- 70.: Flurförderfahrzeug
- 71.: Tragplatte
- 72.: Tragplatte
- 73.: Fahrantrieb
- 74.: Fahrantrieb
- 75.: Hubantrieb
- 76.: Hubantrieb
- 77.: Nocken
- 78.: Nocken
- 79.: Nocken
- 80.: Nocken
- 81.: Achse
- 82.: Achse
- 83.: Achse
- 84.: Achse

## Patentansprüche

1. Regalförderzeug für die Übernahme und den Transport von Paletten (18,19) in einem Hochregallager, mit zwei unmittelbar nebeneinander liegenden Linien (16,17) für die Übernahme, den Transport und die Lagerung von Paletten (18,19), die von im wesentlichen funktionsgleichen, nebeneinander liegenden Vorrichtungen (25, 61, 62) bedient werden, wobei das Regalförderzeug (15) für die Übernahme der Paletten (18,19) mit einer Aufnahmestation (22) für die Paletten (18,19) versehen ist, die einen Kettenförderer (25) mit wenigstens drei nebeneinander und voneinander beabstandet angeordneten, umlaufenden Gelenkketten (26,27,28) aufweist, **dadurch gekennzeichnet, dass** zwischen benachbarten Gelenkketten (26, 27, 28) zwei im wesentlichen gleich ausgebildete Flurförderfahrzeuge (61,62) motorisch selbstständig verfahrbar vorgesehen sind.

2. Regalförderzeug nach einem oder mehreren der vorangehenden Ansprüche, **dadurch gekennzeichnet, dass** die Gelenkketten (26,27,28) mechanisch synchronisiert umlaufend ausgebildet sind.

3. Regalförderzeug nach einem oder mehreren der vorangehenden Ansprüche, **dadurch gekennzeichnet, dass** eine mittlere Gelenkkette (27) zumindest abschnittsweise eine Breite aufweist derart, dass der Stoss zwischen zwei nebeneinander angeordneter Paletten (18,19) sicher untergriffen ist.

4. Regalförderzeug nach einem oder mehreren der vorangehenden Ansprüche, **dadurch gekennzeichnet, dass** die Gelenkketten (26,27,28) zumindest einen Abschnitt (34) mit unmittelbar nebeneinander liegenden, miteinander verkoppelten Gelenkkettenabschnitten (35-39) aufweist.

5. Regalförderzeug nach einem oder mehreren der vorangehenden Ansprüche, **dadurch gekennzeichnet, dass** wenigstens ein mittig angeordneter Gelenkkettenabschnitt (35) als Gelenkkette (28) umlaufend ausgebildet ist.

6. Regalförderzeug nach einem oder mehreren der vorangehenden Ansprüche, **dadurch gekennzeichnet, dass** in einer Draufsicht auf eine Abwicklung des Abschnitts (34) dessen Anfang bzw. Ende zu den äußeren Seitenrändern (40,41) hin jeweils verkürzte Gelenkkettenabschnitte (36-39) aufweist.

7. Regalförderzeug nach einem oder mehreren der vorangehenden Ansprüche, **dadurch gekennzeichnet, dass** die Gelenkkette (26-28) bzw. die Gelenkkettenabschnitte (35-39) Rollen (42) aufweisen, die sich in dem Paletten tragenden Bereich auf Führungsstegen (43-47) abstützen.

8. Regalförderzeug nach einem oder mehreren der vorangehenden Ansprüche, **dadurch gekennzeichnet, dass** der Kettenförderer (25) als Paletten (18,19) tragende Baugruppe eines Aufzuges ausgebildet ist.

9. Regalförderzeug nach einem oder mehreren der vorangehenden Ansprüche, **dadurch gekennzeichnet, dass** die Führungsstege (43-47) zumindest gegenüberliegend von L-förmigen Profilen (52,53;54,55) getragen sind, wobei die horizontal sich erstreckenden, aufeinander zu weisenden Schenkel (57,58;59,60) als Fahrbahn für ein Flurförderfahrzeug (61;62) ausgebildet sind.

10. Regalförderzeug nach einem oder mehreren der vorangehenden Ansprüche, **dadurch gekennzeichnet, dass** die Flurförderfahrzeuge (61,62) elektrisch/elektronisch synchronisiert parallel verfahrbar sind.

11. Regalförderzeug nach einem oder mehreren der vorangehenden Ansprüche, **dadurch gekennzeichnet, dass** jedes Flurförderfahrzeug (61,62) über wenigstens eine anhebbare Tragplatte (67,68) für eine Palette verfügt, die aus einer Position oberhalb der Gelenkketten (26-28) unter dieselben absenkbar ausgebildet ist.

12. Regalförderzeug nach einem oder mehreren der vorangehenden Ansprüche, **dadurch gekennzeichnet, dass** in den Eckbereichen der Tragplatte (71) gleichermaßen ausgerichtete Nocken (77,78) angelenkt sind, die paarweise nebeneinander auf der gleichen, horizontalen Achse (81;82) und hintereinander auf parallelen, in einer Ebene liegenden Achsen (81,82) verschwenkbar angeordnet sind.

13. Regalförderzeug nach einem oder mehreren der vorangehenden Ansprüche, **dadurch gekennzeichnet, dass** die Flurförderfahrzeuge (69,70) jeweils einen gesondert ausgebildeten Hubantrieb (75,76) aufweisen und dass die Hubantriebe (75,76) elektrisch/elektronisch gekoppelt sind.

14. Regalförderzeug nach einem oder mehreren der vorangehenden Ansprüche, **dadurch gekennzeichnet, dass** eine Kabelmessung der verfahren Wegstrecke bei jedem der Flurförderfahrzeuge vorgesehen ist.

## Claims

1. Storage and retrieval machine for receiving and transporting pallets (18, 19) in a high-rise storage rack, with two immediately adjacent lines (16, 17) for receiving, transporting and depositing pallets (18, 19) which are operated by adjacent devices (25, 61, 62) which are substantially functionally identical, the storage and retrieval machine (15) being provided with a receiving station (22) for the pallets (18, 19), for receiving the pallets (18, 19), which comprises a chain conveyor (25) with at least three adjacent circulating link chains (26, 27, 28) arranged spaced apart from one another, **characterised in that** between adjacent link chains (26, 27, 28) two industrial trucks (61, 62) are provided of substantially the same construction and which may be driven independently.

2. Storage and retrieval machine according to one or more of the preceding claims, **characterised in that** the link chains (26, 27, 28) are configured to circulate in mechanical synchronism.

3. Storage and retrieval machine according to one or more of the preceding claims, **characterised in that** the width of a central link chain (27) is at least partially such that the joint between two adjacent pallets (18, 19) is securely supported.

4. Storage and retrieval machine according to one or more of the preceding claims, **characterised in that** the link chains (26, 27, 28) comprise at least one portion (34) with immediately adjacent link chain portions (35-39) which are coupled to one another.

5. Storage and retrieval machine according to one or more of the preceding claims, **characterised in that** at least one centrally arranged link chain portion (35) is configured as a circulating link chain (28).

6. Storage and retrieval machine according to one or more of the preceding claims, **characterised in that** in a developed plan view of the portion (34), the front and/or end of which has link chain portions (36-39) which are respectively shortened toward the outer side edges (40, 41).

7. Storage and retrieval machine according to one or more of the preceding claims, **characterised in that** the link chain (26-28) and/or the link chain portions (35-39) comprise rollers (42) which are supported on guidebars (43-47) in the region carrying the pallets.

8. Storage and retrieval machine according to one or more of the preceding claims, **characterised in that** the chain conveyor (25) is configured as a hoist assembly carrying pallets (18, 19).

9. Storage and retrieval machine according to one or more of the preceding claims, **characterised in that** the guidebars (43-47) are carried at least opposite L-shaped profiles (52, 53; 54, 55), the horizontally extending arms (57, 58; 59, 60), facing one another, being configured as a track for an industrial truck (61; 62).

10. Storage and retrieval machine according to one or more of the preceding claims, **characterised in that** the industrial trucks (61, 62) may be driven electrically/electronically in parallel synchronism.

11. Storage and retrieval machine according to one or more of the preceding claims, **characterised in that** each industrial truck (61, 62) uses at least one liftable base plate (67, 68) for a pallet, which is configured to be lowerable from a position above the link chains (26-28) to a position thereunder.

12. Storage and retrieval machine according to one or more of the preceding claims, **characterised in that** equally oriented cams (77, 78) are articulated in the corner regions of the base plate (71) and which are pivotably arranged in adjacent pairs on the same horizontal axis (81; 82) and behind one another on parallel axes (81, 82) located in one plane.

13. Storage and retrieval machine according to one or more of the preceding claims, **characterised in that** the industrial trucks (69, 70) each comprise a specially constructed hoisting mechanism (75, 76) and **in that** the hoisting mechanisms (75, 76) are coupled together electrically/electronically.

14. Storage and retrieval machine according to one or more of the preceding claims, **characterised in that** a cable measurement is provided of the distance travelled for each of the industrial trucks.

## Revendications

1. Gerbeur pour le transfert et le transport de palettes (18, 19) dans un entrepôt à rayonnage de grande hauteur, avec deux lignes (16, 17) situées directement l'une à côté de l'autre pour le transfert, le transport et l'entreposage de palettes (18, 19) qui sont desservies par des dispositifs essentiellement de mêmes fonctions situés l'un à côté de l'autre (25, 61, 62), le gerbeur (15) pour le transfert des palettes (18, 19) étant pourvu d'un poste de réception (22) pour les palettes (18, 19), qui présente un convoyeur à chaînes (25) avec au moins trois chaînes à articulations (26, 27, 28) circulantes, disposées l'une à côté de l'autre et à distance l'une de l'autre, **caractérisé en ce que** deux véhicules de manutention (61, 62) d'une structure essentiellement identique sont prévus de façon à pouvoir se déplacer de façon autonome et motorisée entre les chaînes à articulation voisines (26, 27, 28).

2. Gerbeur selon l'une ou plusieurs des revendications précédentes, **caractérisé en ce que** les chaînes à articulation (26, 27, 28) sont formées de façon à circuler et à être mécaniquement synchronisées.

3. Gerbeur selon l'une ou plusieurs des revendications précédentes, **caractérisé en ce qu'**une chaîne à articulations (27) centrale présente au moins par section, une largeur, de telle sorte que le choc entre deux palettes disposées l'une à côté de l'autre (18, 19) est encaissé sûrement par le dessous.

4. Gerbeur selon l'une ou plusieurs des revendications précédentes, **caractérisé en ce que** les chaînes à articulation (26, 27, 28) présentent au moins une section (34) avec des sections de chaîne à articulations (35-39) situées directement l'une à côté de l'autre, couplées entre elles.

5. Gerbeur selon l'une ou plusieurs des revendications précédentes, **caractérisé en ce qu'**au moins une section de chaîne à articulations (35) disposée de façon centrale, est formée de façon à circuler en tant que chaîne à articulation (28).

6. Gerbeur selon l'une ou plusieurs des revendications précédentes, **caractérisé en ce que**, dans une vue de dessus d'un déroulement de la section (34), son début ou sa fin vers les bords latéraux externes (40, 41) présentent à chaque fois des sections de chaîne (36-39) raccourcies.

7. Gerbeur selon l'une ou plusieurs des revendications précédentes, **caractérisé en ce que** la chaîne à articulations (26-28) ou les sections de chaîne à articulations (35-39) présentent des rouleaux (42) qui prennent appui sur des nervures de guidage (43-47) dans la zone portant les palettes.

8. Gerbeur selon l'une ou plusieurs des revendications précédentes, **caractérisé en ce que** le convoyeur à chaîne (25) est formé en tant que sous-groupe portant des palettes (18, 19) d'un élévateur.

9. Gerbeur selon l'une ou plusieurs des revendications précédentes, **caractérisé en ce que** les nervures de guidage (43-47) sont portées au moins de façon opposée par des profils en forme de L (52, 53; 54, 54), les traverses (57, 58; 59, 60) s'étendant horizontalement dirigées l'une sur l'autre, sont formées en tant que voie de roulement pour un véhicule de manutention (61; 62).

10. Gerbeur selon l'une ou plusieurs des revendications précédentes, **caractérisé en ce que** les véhicules de manutention (61, 62) sont déplaçables électriquement/électroniquement de façon synchronisée, en parallèle.

11. Gerbeur selon l'une ou plusieurs des revendications précédentes, **caractérisé en ce que** chaque véhicule de manutention (61, 62) dispose d'au moins une plaque d'appui (67, 68) pouvant être soulevée, pour une palette, qui est formée de façon à pouvoir, à partir d'une position au-dessus des chaînes à articulation (26-28), s'abaisser sous celles-ci.

12. Gerbeur selon l'une ou plusieurs des revendications précédentes, **caractérisé en ce que** des cames (77, 78) orientées uniformément dans les zones d'angle de la plaque d'appui (71) sont articulées, lesquelles cames sont disposées de façon pivotable, l'une à côté de l'autre, par paires sur le même axe horizontal (81; 82) et l'une derrière l'autre sur des axes parallèles (80, 82) situés dans un plan.

13. Gerbeur selon l'une ou plusieurs des revendications précédentes, **caractérisé en ce que** les véhicules de manutention (69, 70) présentent à chaque fois un entraînement en élévation (75, 76) d'une structure particulière, et que les entraînements en élévation (75, 76) sont couplés électriquement/électroniquement.

14. Gerbeur selon l'une ou plusieurs des revendications précédentes, **caractérisé en ce qu'**une mesure par câble du trajet parcouru est prévue pour chacun des véhicules de manutention.
